# EUROPÄISCHE PATENTSCHRIFT

(11) **EP 1 132 631 B1**
(45) Veröffentlichungstag und Bekanntmachung des Hinweises auf die Patenterteilung: **24.03.2004**
(21) Anmeldenummer: 01100777.0
(22) Anmeldetag: 13.01.2001
(51) Int. Cl.: F16B 21/06

(54) **Klipsverbindung**
Snap connection
Assemblage à enclenchement

(30) Priorität: 09.03.2000 DE 10011549
(43) Veröffentlichungstag der Anmeldung: 12.09.2001
(73) Patentinhaber: Siemens Aktiengesellschaft, 80333 München (DE)
(72) Erfinder: Reuter, Thomas, 61130 Nidderau (DE); Beck, Andreas, 65620 Waldbrunn (DE)

(56) Entgegenhaltungen:
- EP-A- 0 863 315
- DE-C- 19 840 014

## Beschreibung

Die Erfindung betrifft eine Klipsverbindung, bei der ein Bauteil zumindest zwei Rastzungen aufweist, wobei zum Übergreifen jeweils einer Rastfläche eines anderen Bauteils die erste Rastzunge einen ersten Rastvorsprung mit einer ersten Rastflanke und die zweite Rastzunge einen zweiten Rastvorsprung mit einer zweiten Rastflanke hat.

Klipsverbindungen der vorstehenden Art werden in der Technik in großer Anzahl zur Befestigung von Bauteilen eingesetzt, beispielsweise zur Befestigung von Instrumenten in einer Armaturentafel eines Kraftfahrzeugs oder zur Befestigung von Frontteilen an einem Instrument. Die Rastvorsprünge sind dabei so gestaltet, dass das zu montierende Bauteil bei der Montage in Fügerichtung eingeschoben werden kann, in Endstellung zwangsläufig verklipst und dann gegen eine Bewegung entgegen der Fügerichtung gesichert ist. Hierzu sind die Rastvorsprünge widerhakenartig ausgebildet.

Da die miteinander zu verklipsen den Bauteile oftmals relativ grobe Toleranzen aufweisen, muss man die Klipsverbindung so gestalten, dass im verklipsten Zustand zwischen den Rastflanken der Rastvorsprünge und den von den Rastflanken hintergriffenen Rastflächen beträchtliches Spiel entsteht, damit sichergestellt ist, dass die Rastvorsprünge in Endstellung tatsächlich verrasten können. Ist das nicht der Fall, dann besteht insbesondere bei Bauteilen, welche mit mehreren Rastzungen verrastet werden müssen, die Gefahr, dass einzelne Rastzungen unbemerkt nicht verrasten und das verklipste Bauteil deshalb nicht zuverlässig gehalten ist.

Das Spiel zwischen den Rastflanken und Rastflächen führt dazu, dass das verklipste Bauteil sich relativ zu dem es aufnehmenden Bauteil bewegen kann, was im Kraftfahrzeug oftmals die Ursache für unerwünschte Klappergeräusche ist. Häufig kann man solche Klappergeräusche dadurch vermeiden, dass man sogenannte Antiklapperfedern vorsieht, welche die verklipsten Bauteile entgegen der Fügerichtung vorspannen, so dass die Rastflanken und Rastflächen im verrasteten Zustand mit Vorspannung aufeinanderliegen. Für solche Antiklapperfedern fehlt jedoch häufig der erforderliche Platz. Weiterhin verteuern sie die Klipsverbindung unerwünscht stark.

Die DE 198 40 014 C1 zeigt eine Klipsverbindung, die als Spreizniet ausgebildet ist. Zum Übergreifen jeweils einer Rastfläche des einen Bauteils sind zwei Rastzungen vorgesehen, deren Rastflanke jeweils schräg zur Rastfläche verläuft. Dadurch entsteht eine das Spreizniet in das Bauteil hineinziehende Vorspannkraft, wodurch es sich mit zwei Säulen auf das Bauteil aufsetzt und dadurch ein axiales Spiel vermieden wird. Um zu verhindern, dass die Rastzungen aufgrund der schrägen Flächen aus ihrer Verrastungsstellung gelangen können, wird zwischen beiden Rastzungen ein Spreizkörper eingesetzt.

Die EP 0 863 315 A2 zeigt auch schon eine Klipsverbindung, durch die eine Abdeckhaube auf einem Grundkörper befestigt wird. An einer Seite der Abdeckhaube sind Rastzungen vorgesehen, die mit Spiel eine Rastfläche hintergreifen, wenn die Abdeckhaube auf dem Grundkörper aufsitzt. An einer gegenüberliegenden Seite der Abdeckhaube sind Drehbefestigungselemente vorgesehen, die die Abdeckhaube auf den Grundkörper vorspannen. Da an der Seite der Rastzungen keine Drehbefestigungselemente vorgesehen sind, können die Hakenteile der Rastzungen frei gegen die jeweilige Rastfläche schlagen und dadurch Klappergeräusche verursachen.

Der Erfindung liegt das Problem zugrunde, eine Klipsverbindung der eingangs genannten Art so zu gestalten, dass Spiel zwischen den Rastflanken und Rastflächen auf möglichst einfache Weise vermieden wird, ohne dass die Klipsverbindung oder die sie aufweisenden Bauteile mit engen Toleranzen gefertigt werden müssen.

Dieses Problem wird erfindungsgemäß dadurch gelöst, dass die erste Rastflanke und die ihr zugeordnete erste Rastfläche rechtwinklig zur Fügerichtung verlaufen, und die zweite Rastflanke und die ihr zugeordnete zweite Rastfläche sich im verrasteten Zustand gegenseitig in einem solchen Winkel berühren, dass eine das Bauteil in Fügerichtung vorspannende und zum Bauteil hin verschiebende Einzugskraft entsteht, durch die im verrasteten Zustand die erste Rastflanke und die ihr zugeordnete erste Rastfläche geringen Abstand zueinander haben.

Bei einer solchen, erfindungsgemäßen Klipsverbindung haben die beiden Rastvorsprünge unterschiedliche Aufgaben. Der Rastvorsprung mit der rechtwinklig zur Fügerichtung ausgerichteten Rastflanke dient dazu, eine formschlüssige Verrastung sicherzustellen, während der andere Rastvorsprung die Aufgabe hat, das verklipste Bauteil in Fügerichtung vorzuspannen und deshalb dafür sorgt, dass die Rastflanke und die Rastfläche der formschlüssigen Klipsverbindung sich nicht gegenseitig berühren, so dass dort Klappergeräusche ausgeschlossen sind. Durch die Erfindung wird das verklipste Bauteil somit in die entgegengesetzte Richtung vorgespannt wie bei einer Klipsverbindung mit Antiklapperfedern.

Besonders einfach ist die Klipsverbindung gestaltet, wenn die zweite Rastflanke und die zweite Rastfläche in einem stumpfen Winkel zur Fügerichtung des Bauteils verlaufen.

Die beiden unterschiedlich gestalteten Rastzungen können an einem einzigen, elastischen Bauteil vorgesehen sein, wenn gemäß einer anderen Weiterbildung der Erfindung die beiden Rastzungen zusammen mit einer Basis eine Gabel bilden und die Rastzungen nahe der freien Enden der Rastzungen in der Ebene der Gabel jeweils nach außen weisend angeordnet sind.

Den gleichen Vorteil kann man jedoch auch erzielen, wenn die Rastzungen zusammen mit einem Basisbereich eine Gabel bilden und die Rastzungen quer zur Ebene der Gabel in eine Richtung weisend ausgebildet sind.

Die Rastflächen, an welchen die beiden Rastzungen verklipst werden, lassen sich besonders einfach bilden, wenn sie an einer die Gabel mit den beiden Rastzungen überbrückenden Lasche vorgesehen sind.

Zur weiteren Vereinfachung trägt es bei, wenn die Rastflächen durch eine rechtwinklig zur Fügerichtung verlaufende Stirnwand der Lasche gebildet sind.

Die Erfindung lässt verschiedene Ausführungsformen zu. Zwei davon sind in der Zeichnung dargestellt und werden nachfolgend beschrieben. Diese zeigt in
- Figur 1: einen perspektivische Darstellung einer ersten Ausführungsform einer Klipsverbindung,
- Figur 2: eine perspektivische Darstellung einer zweiten Ausführungsform einer Klipsverbindung nach der Erfindung.

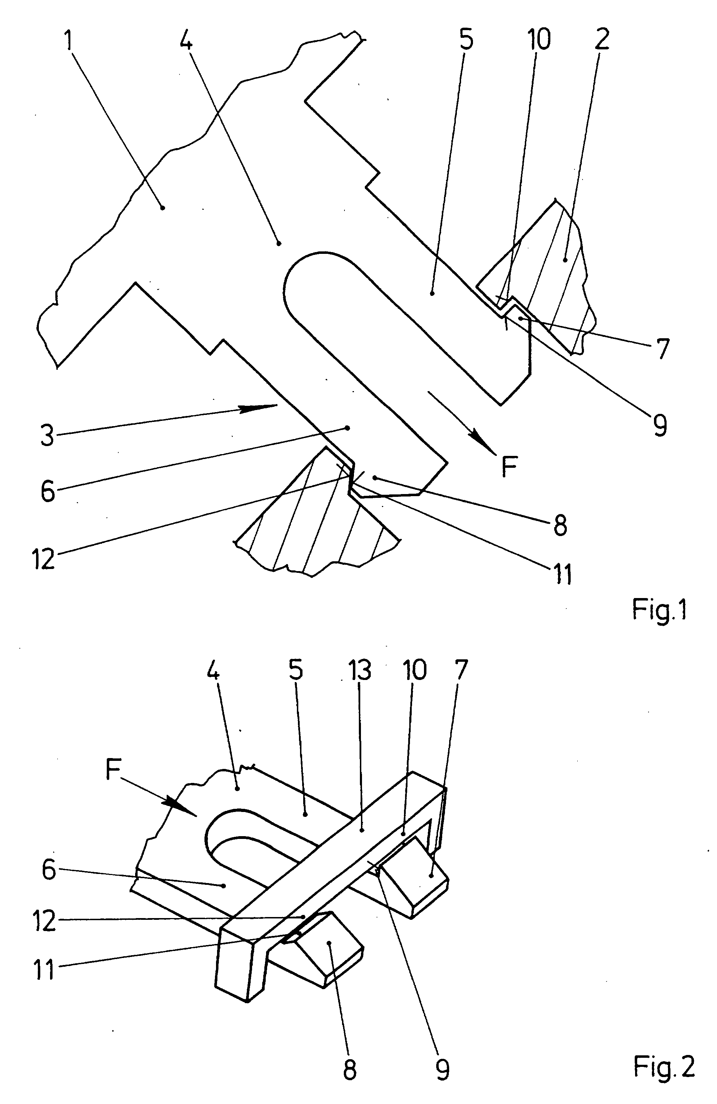

Die Figur 1 zeigt Teilbereiche von zwei Bauteilen 1, 2, welche durch eine Klipsverbindung 3 miteinander verbunden sind. Hierzu hat das eine Bauteil 1 zwei zusammen mit einer Basis 4 eine Gabel bildende Rastzungen 5, 6, die jeweils in der Ebene der Rastzungen 5, 6 einen nach außen gerichteten Rastvorsprung 7, 8 haben. Der Rastvorsprung 7 hat eine rechtwinklig zur Fügerichtung F ausgerichtete Rastflanke 9, welche mit geringem Abstand zu einer parallel zu ihr und deshalb ebenfalls rechtwinklig zur Fügerichtung ausgerichteten Rastfläche 10 des Bauteils 2 verläuft. Zieht man an dem Bauteil 1 entgegengesetzt zur Fügerichtung, dann legt sich die Rastflanke 9 gegen die Rastfläche 10, so dass ein Formschluss entsteht.

Der Rastvorsprung 8 hat eine Rastflanke 11, die in einem stumpfen Winkel zur Fügerichtung verläuft. Das Bauteil 2 liegt gegen diese schräg verlaufende Rastflanke 11 mit einer schräg ausgerichteten Rastfläche 12 an. Da die beiden Rastzungen 5, 6 in eine Spreizstellung vorgespannt sind, kommt es durch den schrägen Verlauf der Rastflanke 11 und der Rastfläche 12 zu einer Einzugskraft des Bauteils 1 in Fügerichtung. Dadurch bleibt das Spiel zwischen der Rastflanke 9 und der Rastfläche 10 an der gegenüberliegenden Seite stets erhalten, wodurch Klappergeräusche vermieden werden.

Auch bei der Ausführungsform nach Figur 2 bilden die Rastzungen 5, 6 zusammen mit einer Basis 4 eine Gabel. Die Rastvorsprünge 7, 8 sind jedoch im Gegensatz zur Ausführungsform nach Figur 1 quer zur Ebene der Rastzungen 5, 6 ausgerichtet. Genau wie bei dem vorangegangenen Ausführungsbeispiel hat der Rastvorsprung 7 die quer zur Fügerichtung verlaufende Rastflanke 9, während der Rastvorsprung 8 wiederum die schräg verlaufende Rastflanke 11 hat. Über beide Rastzungen 5, 6 hinweg führt brückenartig eine Lasche 13, deren Stirnfläche die Rastflächen 10, 12 bildet. Hierbei schnappt beim Verrasten die Rastflanke 9 über die Rastfläche 10, während die Rastflanke 11 ständig an der unteren Kante der Stirnfläche anliegt und deshalb für eine Einzugskraft in Fügerichtung F sorgt.

## Patentansprüche

1. Klipsverbindung, bei der ein Bauteil (1) zumindest zwei Rastzungen (5, 6) aufweist, wobei zum Übergreifen jeweils einer Rastfläche (10, 12) eines anderen Bauteils (2) die erste Rastzunge (5) einen ersten Rastvorsprung (7) mit einer ersten Rastflanke (9) und die zweite Rastzunge (6) einen zweiten Rastvorsprung (8) mit einer zweiten Rastflanke (11) hat, **dadurch gekennzeichnet, dass** die erste Rastflanke (9) und die ihr zugeordnete erste Rastfläche (10) rechtwinklig zur Fügerichtung (F) verlaufen, und die zweite Rastflanke (11) und die ihr zugeordnete zweite Rastfläche (12) sich im verrasteten Zustand gegenseitig in einem solchen Winkel berühren, dass eine das Bauteil (1) in Fügerichtung vorspannende und zum Bauteil (2) hin verschiebende Einzugskraft entsteht, durch die im verrasteten Zustand die erste Rastflanke (9) und die ihr zugeordnete erste Rastfläche (10) geringen Abstand zueinander haben.

2. Klipsverbindung nach Anspruch 1, **dadurch gekennzeichnet, das** die zweite Rastflanke (11) und die zweite Rastfläche (12) in einem stumpfen Winkel zur Fügerichtung (F) des Bauteils (1) verlaufen.

3. Klipsverbindung nach den Ansprüchen 1 oder 2, **dadurch gekennzeichnet, dass** die beiden Rastzungen (5, 6) zusammen mit einer Basis (4) eine Gabel bilden und die Rastzungen (5, 6) nahe der freien Enden der Rastzungen (5, 6) in der Ebene der Gabel jeweils nach außen weisend angeordnet sind.

4. Klipsverbindung nach Ansprüche 1 oder 2, **dadurch gekennzeichnet, dass** die Rastzungen (5, 6) zusammen mit einer Basis (4) eine Gabel bilden und die Rastzungen (5, 6) quer zur Ebene der Gabel in eine Richtung weisend ausgebildet sind.

5. Klipsverbindung nach Anspruch 4, **dadurch gekennzeichnet, dass** die Rastflächen (10, 12) an einer die Gabel mit den beiden Rastzungen (5, 6) überbrückenden Lasche (13) vorgesehen sind.

6. Klipsverbindung nach Anspruch 5, **dadurch gekennzeichnet, dass** die Rastflächen (10, 12) durch eine rechtwinklig zur Fügerichtung (F) verlaufende Stirnwand der Lasche (13) gebildet sind.

## Claims

1. Clip connection in which one component (1) has at least two latching tongues (5, 6), the first latching tongue (5) having a first latching protrusion (7) with a first latching flank (9), and the second latching tongue (6) having a second latching protrusion (8) with a second latching flank (11), for the purpose of engaging over in each case one latching surface (10, 12) of another component (2), **characterized in that** the first latching flank (9) and the associated first latching surface (10) run at right angles to the joining direction (F), and the second latching flank (11) and the associated second latching surface (12), in the latched state, are in contact with one another at such an angle as to produce a drawing-in force which prestresses the component (1) in the joining direction and displaces it in the direction of the component (2) and by means of which, in the latched state, the first latching flank (9) and the associated first latching surface (10) are spaced apart from one another by a small distance.

2. Clip connection according to Claim 1, **characterized in that** the second latching flank (11) and the second latching surface (12) run at an obtuse angle to the joining direction (F) of the component (1).

3. Clip connection according to Claim 1 or 2, **characterized in that** the two latching tongues (5, 6), together with a base (4), form a fork, and the latching tongues (5, 6) are arranged, in the vicinity of the free ends of the latching tongues (5, 6), such that they are oriented outwards in each case in the plane of the fork.

4. Clip connection according to Claim 1 or 2, **characterized in that** the latching tongues (5, 6), together with a base (4), form a fork, and the latching tongues (5, 6) are designed such that they are oriented in one direction transversely to the plane of the fork.

5. Clip connection according to Claim 4, **characterized in that** the latching surfaces (10, 12) are provided on a bracket (13) which spans the fork with the two latching tongues (5, 6).

6. Clip connection according to Claim 5, **characterized in that** the latching surfaces (10, 12) are formed by an end wall of the bracket (13) which runs at right angles to the joining direction (F).

## Revendications

1. Assemblage à agrafes, dans lequel un composant (1) comporte, au moins, deux 1 anguettes d'arrêt (5, 6), la première 1 anguette d'arrêt (5) ayant, pour s'engager dans une surface d'arrêt (10, 12) correspondante d'un autre composant (2), une première saillie d'arrêt (7) avec un premier flanc d'arrêt (9) et la deuxième languette d'arrêt (6) ayant une deuxième saillie d'arrêt (8) avec un deuxième flanc d'arrêt (11) **caractérisé par le fait que** le premier flanc d'arrêt (9) et la première surface d'arrêt (10), qui lui correspond, se développent perpendiculairement à la direction d'assemblage (F) et le deuxième flanc d'arrêt (11) et la deuxième surface d'arrêt (12), qui lui correspond, se touchent, dans la position encliquetée, sous un angle tel qu'il se forme une force de traction, qui soumet le composant (1) à une précontrainte dans le sens de l'assemblage et le fait glisser vers le composant (2) et grâce à laquelle, dans la position encliquetée, le premier flanc d'arrêt (9) et la première surface d'arrêt (10), qui lui correspond, sont à faible distance l'un de l'autre.

2. Assemblage à agrafes selon la revendication 1 **caractérisé par le fait que** le deuxième flanc d'arrêt (11) et la deuxième surface d'arrêt (12) se développent sous un angle obtus par rapport à la direction d'assemblage (F) du composant (1).

3. Assemblage à agrafes selon les revendications 1 ou 2 **caractérisé par le fait que** les deux languettes d'arrêt (5, 6) forment, en commun avec une base (4), une fourche et que les languettes d'arrêt (5, 6) sont disposées, à proximité des extrémités libres des languettes d'arrêt (5, 6), dans le plan de la fourche, tout en étant chacune tournées vers l'extérieur.

4. Assemblage à agrafes selon les revendications 1 ou 2 **caractérisé par le fait que** les languettes d'arrêt (5, 6) forment, en commun avec une base (4), une fourche et que les languettes d'arrêt (5, 6) sont disposées perpendiculairement au plan de la fourche, tout en étant tournées dans une direction.

5. Assemblage à agrafes selon la revendication 4 **caractérisé par le fait que** les surfaces d'arrêt ( 10, 12) sont prévues sur une é clisse (13) qui forme pont au-dessus de la fourche avec les deux languettes d'arrêt (5, 6).

6. Assemblage à agrafes selon la revendication 5 **caractérisé par le fait que** les surfaces d'arrêt (10, 12) sont formées par une face avant de l'éclisse (13), q ui se développe perpendiculairement à la d irection d'assemblage (F).
